# EUROPÄISCHE PATENTSCHRIFT

(11) **EP 1 907 184 B1**
(45) Veröffentlichungstag und Bekanntmachung des Hinweises auf die Patenterteilung: **30.04.2014**
(21) Anmeldenummer: 06777229.3
(22) Anmeldetag: 22.05.2006
(51) Int. Cl.: B29C 35/02, B29C 71/02, F16C 33/20

(54) **VERFAHREN ZUR KALIBRIERUNG DER INNENABMESSUNGEN EINES INSBESONDERE RINGFÖRMIGEN KÖRPERS**
METHOD FOR CALIBRATING THE INNER MEASUREMENTS OF AN, IN PARTICULAR, ANNULAR-SHAPED BODY
PROCEDE DE CALIBRAGE DES DIMENSIONS INTERNES D'UN CORPS EN PARTICULIER ANNULAIRE

(30) Priorität: 29.06.2005 DE 102005030209
(43) Veröffentlichungstag der Anmeldung: 09.04.2008
(73) Patentinhaber: ROBERT BOSCH GMBH, 70442 Stuttgart (DE)
(72) Erfinder: REINER, Juergen, 88167 Gestratz (DE); LUTZ, Bernd, 87437 Kempten (DE)
(86) Internationale Anmeldenummer: PCT/EP2006/062477
(87) Internationale Veröffentlichungsnummer: WO 2007/000380

(56) Entgegenhaltungen:
- EP-A- 0 335 449
- EP-A- 0 391 586
- DE-A1- 1 583 731
- DE-A1- 1 805 090
- GB-A- 1 500 387
- US-A- 5 422 048
- US-A1- 2003 227 104
- DATABASE WPI Week 198744 Derwent Publications Ltd., London, GB; AN 1987-312249 XP002400084 & SU 1 291 286 A (UKR LIGHT IND MINIS) 23. Februar 1987 (1987-02-23)

## Beschreibung

### Stand der Technik

Die Erfindung betrifft ein Verfahren zur Kalibrierung der Innenabmessungen eines insbesondere ringförmigen Körpers aus zumindest teilkristallinem oder thermoplastischem Kunststoff und/oder einen ringförmigen Körper, der nach dem Verfahren nach Anspruch 1 kalibriert ist. Vorteilhafte Weiterbildungen sind in den Unteransprüchen offenbart.

Es sind Kalibrierverfahren bekannt, die rein mechanisch durchgeführt werden und bei denen die zu kalibrierenden Teile üblicherweise nicht erwärmt sind. Zur Kalibrierung wird ein Dorn mit bestimmten Außenabmessungen axial in das Innere eines ringförmigen Körpers eingepresst, um durch plastische Materialverformung die Innenabmessungen dieses ringförmigen Körpers auf ein gewünschtes Solknaß einzustellen. Die Einführung des Doms bewirkt eine örtliche Materialverdichtung im Bereich der inneren Oberfläche des ringförmigen Körpers, wobei das Ausmaß der Materialverdichtung von den Herstellungstoleranzen des ringförmigen Körpers im nicht kalibrierten Zustand abhängt. Nach der Entfernung des Doms federt das Material des ringförmigen Körpers zurück, wobei diese Rückfederung wiederum vom Ausmaß der zuvor erfolgten Materialverdichtung abhängig ist. Infolge dessen variieren die Innenabmessungen eines derart kalibrierten ringförmigen Körpers nach wie vor relativ stark. Mit anderen Worten, lassen sich die gewünschten Maßtoleranzen durch ein derartiges bekanntes Kalibrierverfahren nur hinlänglich genau erreichen. Davon abgesehen eignen sich ringfdrmige Körper aus teilkristallinem oder thermoplastischen Kunststoffmaterial für derartige Kalibrierverfahren nicht, derartige Kalibrierverfahren nicht, weil ihr Material zur Rissbildung neigt. Nachteiligerweise erfolgt deshalb eine Vorschädigung oder im Extremfall sogar eine Zerstörung derartiger Teile.

Ein Verfahren zur Herstellung künstlicher Blutgefäße ist bekannt aus der EP 0 391 586 A2. Offenbart wird ein mehrstufiges Verfahren, bei dem zunächst eine abschnittsweise Dehnung eines Gefäßabschnitts aus PTFE durch Erwärmung des Gefäßabschnitts mittels eines zu Ultraschallschwingungen angeregten Dorns erfolgt, anschließend eine Anordnung des erweiterten Gefäßabschnitts auf einem Spreizdorn mit gewünschter Außenkontur vorgenommen wird und dann eine Temperung des Gefäßabschnitts über einen gewissen Zeitraum stattfindet, bis dieser Gefäßabschnitt sich der Außenkontur des Spreizdorns anpasst hat. Im Ergebnis wird ein Gefäßabschnitt mit zum Beispiel konischer Form oder ein zylindrischer Gefäßabschnitt mit verringerter Wanddicke hergestellt, dessen Enden besonders gut an die Blutgefäße eines Patienten angepasst sind.

### Vorteile der Erfindung

Demgegenüber weist ein Verfahren mit den Merkmalen des Anspruchs 1 den Vorteil auf, dass ringförmige Körper mit Innenwandungen höherer Oberflächengüte und mit engeren Form- und Maßtoleranzen als mit den bekannten Verfahren herstellbar sind. Durch das erfindungsgemäße Verfahren findet eine Materialerwärmung bis über dessen Glasübergangstemperatur hinaus statt, wobei das derart verflüssigtes Material zum Teil in bestehende benachbarte Materialunebenheiten und Poren verdrängt werden kann. Dies bewirkt insgesamt eine Glättung der Oberfläche im Bereich der Innenabmessungen des ringförmigen Körpers, ohne dass es zu einer Materialverdichtung und damit einem Rückgang der Materialelastizität kommt. Gleichzeitig mit der Kalibrierung lassen sich die Materialfasern den späteren Beanspruchungsbedingungen entsprechend räumlich ausrichten, was sich nochmals positiv auf die Stabilität der derart kalibrierten ringförmigen Körper auswirkt.

Ein Körper gemäß Anspruch 3, der nach einem erfindungsgemäßen herfahren hergestellt ist, kann beispielsweise als Gleitlagerbuchse eingesetzt werden. Dadurch kann die Auslegung der Lagerstelle hinsichtlich Einlaufverhalten, Lebensdauer und Einsatzmöglichkeiten deutlich optimiert werden. Derzeit verwendete metallische Gleitlager oder Gleitlager aus einem Metall-Kunststoff-Verbundmaterial lassen sich aufgrund der erreichbaren höheren Genauigkeit erfindungsgemäßer Gleitlagerbuchsen durch preisgünstigere Kunststoffgleidager ersetzen. Besonders geeignet für eine Gleidagerbuchse aus Kunststoff ist der Einsatz als Führungsbuchse für den Kolben einer Kolbenpumpe im Hydraulikaggregat einer elektro-hydraulisch regelbaren Fahrzeugbremsanlage.

Weitere Vorteile oder vorteilhafle Weiterbildungen der Erfindung ergeben sich aus der Beschreibung.

### Zeichnung

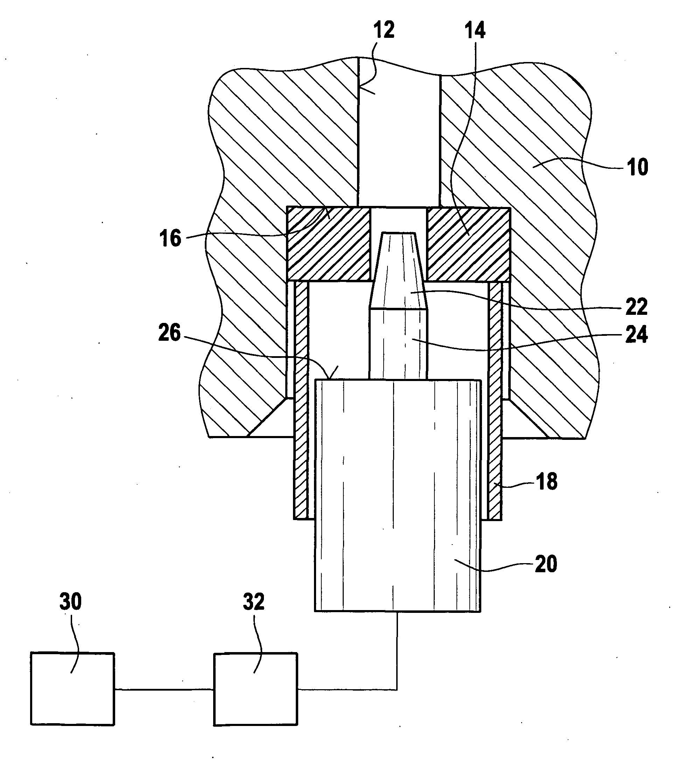

Die Erfindung ist anhand einer einzigen Figur veranschaulicht. Diese zeigt anhand einer Schnittdarstellung einen Ausschnitt einer Kalibriervorrichtung mit einem darin aufgenommenen ringförmigen Körper sowie eine Sonotrode zur Kalibrierung der Innenabmessungen dieses ringförmigen Körpers.

### Beschreibung der Erfindung

In der einzigen Figur ist eine Aufnahmevorrichtung mit der Bezugsziffer 10 versehen. Diese weist eine nach außen offene Aufnahme 12 für einen ringförmigen Körper 14 auf, welcher exemplarisch in seinem Innendurchmesser kalibriert werden soll. Dieser ringförmige Körper 14 besteht aus einem thermoplastischen oder einem zumindest teilkristallinen Kunststoff und wurde zuvor auf konventionelle Weise, beispielsweise in einem Spritzgießverfahren hergestellt. Die Aufnahme 12 wird von einer Bohrung gebildet, die von außen nach innen in ihrem Durchmesser wenigstens einmal zurückgenommen ist. Durch diese Durchmesserreduzierung ergibt eine rechtwinklig ausgebildete Schulter 16, an welcher der ringförmige Körper 14 axial abgestützt ist. Der im Durchmesser kleinere Abschnitt der Aufnahme 12 weist dabei einen größeren Innendurchmesser auf als der gewünschte Innendurchmesser des ringförmigen Körpers 14.

Der außen liegende, im Innendurchmesser größere Abschnitt der Aufnahme 12 ist auf den Außendurchmesser des ringförmigen Körpers 14 derart abgestimmt, dass Letzterer mit radialer Pressung in der Aufnahme 12 gehalten wird. Mittels eines von außen in die Aufnahme 12 einführbaren Niederhalters 18 kann der ringförmige Körper 14 zusätzlich axial gegen die Schulter 16 der Aufnahme 12 gedrückt werden. Dies gewährleistet eine besonders zuverlässige radiale und axiale Fixierung des ringförmigen Körpers 14 in der Aufnahme 12 während des nachfolgenden Kalibrierverfahrens.

Bei diesem Kalibrierverfahren wird eine Sonotrode 20 von außen in das Innere des ringförmigen Körpers 14 eingeführt. Die Sonotrode 20 weist dazu einen konisch geformten Einführungsabschnitt 22 auf, der an einem vom ringförmigen Körper 14 abgewandten Ende in einen zylindrischen Kalibrierungsabschnitt 24 übergeht. Dieser Kalibrierungsabschnitt 24 ist axial mindestens so lang, dass er den ringförmigen Körper 14 vollständig durchdringen kann. An seinem Ende geht der Kalibrierungsabschnitt 24 in eine Anschlagschulter 26 über.

Die Sonotrode 20 ist Teil eines an sich bekannten und nicht näher dargestellten Schwinggebildes, wie es beispielsweise in Ultraschallschweißanlagen eingesetzt wird. Derartige Schwinggebilde umfassen neben der Sonotrode 20 einen elektronisch ansteuerbaren, vorzugsweise piezoelektronischen Schallwandler 30 und ein Amplitudentransformationsstück 32. Durch elektronische Ansteuerung des Schallwandlers 30 wird dieser zu mechanischen Schwingungen im Ultraschallfrequenzbereich angeregt, welche über das Amplitudentransformationsstück 32 auf das eigentliche Kalibrierungswerkzeug, die Sonotrode 20, übertragen werden.

Eine derart schwingende Sonotrode 20 wird mit axialer Vorschubgeschwindigkeit in das Innere des zu kalibrierenden ringförmigen Körpers 14 eingerührt. Im Falle einer Berührung der Sonotrode 20 mit der Innenwandung des ringförmigen Körpers 14, werden die Schwingungen mechanisch übertragen. Durch Molekular- und Grenzflächenreibung entsteht dabei Wärme, welche den Dämpfungskoeffizienten des Kunststoffmaterials des ringförmigen Körpers 14 anwachsen lässt. Dies bewirkt ein lokales Ansteigen der Temperatur im Bereich des Innendurchmessers des ringförmigen Körpers 14 über die Glasübergangstemperatur T(glas) seines Materials hinaus. In Abhängigkeit der bestehenden Rundheits- und Durchmessertoleranz beginnt sich der ringförmige Körper 14 deshalb lokal zu erweichen. Diese Reaktion beschleunigt sich von selbst, da wegen der Zunahme des Dämpfungskoeffizienten im Kunststoffmaterial des ringförmigen Körpers 14 ein größerer Anteil der Schwingungsenergie in Wärme umgesetzt wird. Das dabei erweichte und letztendlich angeschmolzene Material des ringförmigen Körpers 14 kann von der weiter eindringenden Sonotrode 20 seitlich in Bereiche eventuell größeren Innendurchmessers oder anderenfalls axial nach außen aus dem ringförmigen Körper 14 hinaus verdrängt werden. Mit fortschreitendem Eintritt der Sonotrode 20 in den ringförmigen Körper 14 gelangt ein Kalibrierungsabschnitt 24 in Eingriff. Dessen Durchmesser ist zusammen mit den Ansteuerparametern und der Auslegung des Schwinggebildes 30,32 auf den gewünschten Solldurchmesser des ringförmigen Körpers 14 abgestimmt. Nach der Erreichung einer axialen Endposition der Sonotrode 20, in welcher die Anschlagschulter 26 an der ihr zugewandten Stirnseite des ringförmigen Körpers 14 anliegt, wird der ringförmige Körper14 wieder auf eine Temperatur unterhalb der Glasübergangstemperatur T(glas) seines Materials abgekühlt und die Sonotrode 20 entgegen ihrer Einführungsrichtung aus dem ringförmigen Körper 14 zurück gefahren. Gegebenfalls kann danach der Körper 14 aus der beschriebenen Aufnahmevorrichtung 10 entnommen bzw. automatisiert ausgeworfen werden.

Auf die erläuterte Weise lassen sich insbesondere Gleitlagerbuchsen oder Führungsbuchsen für Kolbenpumpen elektrohydraulisch regelbarer Fahrzeugbremsanlagen gut reproduzierbar und besonders kostengünstig herstellen. Sie weisen eine für Kunststoffbuchsen große Genauigkeit bezüglich ihrer Rundheit und ihrer Durchmessertoleranz auf und können bislang verwendete und in ihrer Herstellung aufgrund bestehender Präzisionsanforderungen teure Buchsen aus Metall oder aus Metall-Kunststoff-Verbundmaterialien ersetzen.

Selbstverständlich sind Änderungen oder Ergänzungen gegenüber dem Beschriebenen denkbar, ohne vom Grundgedanken der Erfindung abzuweichen. Diesbezüglich bleibt anzumerken, dass der in obiger Beschreibung verwendete Begriff "ringförmiger Körper 14" nicht zwangsweise als kreisringförmig auszulegen ist, da sich anhand des beschriebenen Verfahrens auch Körper mit ovaler oder mit eckiger Außen- und/oder Innenkontur herstellen lassen. Ebenso lassen sich auch nicht geschlossene, offene Ringformen herstellen. Im Übrigen kann zur Durchführung des beschriebenen Kalibrierverfahrens auf eine separate Aufnahmevorrichtung 10 verzichtet werden, wenn der ringförmigen Körper 14 an deren statt in einer entsprechenden Aufnahme 12 eines mit dem ringförmigen Körper 14 auszustattenden beliebigen Erzeugnisses angeordnet wird Dies hätte den Vorteil, dass sich durch die Kalibrierung gleichzeitig die Toleranzen der Aufnahme 12 eliminieren ließen und dass das Kalibierverfahren in einen laufenden Montageprozesses integrierbar wäre. Das beschriebene Kalibrierverfahren kann wenigstens teilweise automatisiert durchgeführt werden.

## Patentansprüche

1. Verfahren zur Kalibrierung der Innenabmessungen eines insbesondere ringförmigen Körpers (14) aus einem teilkristallinen oder thermoplastischen Kunststoff, bei dem eine lokale Erwärmung des ringförmigen Körpers (14) auf mindestens Glasübergangstemperatur T(glas) seines Materials durch mechanische Übertragung von Schwingungen auf den ringförmigen Körper (14), mittels Anregung eines Schwinggebildes (20,30,32) zu mechanischen Schwingungen erfolgt und sich eine Abkühlung des ringförmigen Körpers (14) auf eine Temperatur unterhalb der Glasübergangstemperatur T(glas) seines Materials anschließt, mit folgenden Verfahrensschritten:
- axiale und radiale Fixierung des ringförmigen Körpers (14) in einer Bohrung einer Aufnahmevorrichtung (10) vor der lokalen Erwärmung des ringförmigen Körpers (14),
- Einführung eines Schwinggebildes (20,30,32) in das Innere des ringförmigen Körpers (14) mit axialem Vorschub,
- axiales Nachführen des Schwinggebildes (20,30,32) bis zum Eintauchen eines Kalibrierungsabschnitts (24) des Schwinggebildes (20,30,32) in den ringförmigen Körper (14), wobei erweichtes oder angeschmolzenes Material des ringförmigen Körpers (14) vom eindringenden Schwinggebilde (20,30,32) seitlich in Bereiche größeren Innendurchmessers des ringförmigen Körpers (14) oder axial nach außen aus dem ringförmigen Körper (14) hinaus verdrängt wird,
- gegebenenfalls Entnahme des ringförmigen Körpers (14) aus der Aufnahmevorrichtung (10) nach einem Zurückfahren des Schwinggebildes (20,30,32) und nach erfolgter Abkühlung des ringförmigen Körpers (14).

2. Verfahren nach Anspruch 1, **dadurch gekennzeichnet, dass** der ringförmige Körper (14) von einem Niederhalter (18) axial gegen eine Schulter (16) der Aufnahmevorrichtung (10) gedrückt wird.

3. Körper, insbesondere Gleitbuchse eines Gleitlagers oder Führungsring für einen Kolben einer Kolbenpumpe einer elektrohydraulisch regelbaren Fahrzeugbremsanlage, wobei der Körper aus Kunststoff besteht, **dadurch gekennzeichnet, dass** der Körper ringförmig ausgebildet ist und dass die Innenabmessungen des ringförmigen Körpers nach einem Verfahren nach den Merkmalen der Ansprüche 1 oder 2 derart kalibriert sind, dass eine Oberfläche im Bereich der Innenabmessungen des Körpers eine Glättung aufweist, ohne dass es zu einer Materialverdichtung und damit zu einem Rückgang der Materialelastizität kommt.

## Claims

1. Method for calibrating the internal measurements of an in particular annular body (14) made of a partially crystalline or thermoplastic plastic, in which local heating of the annular body (14) to at least the glass transition temperature (T_{glass}) of its material is carried out by means of mechanical transmission of oscillations to the annular body (14) by stimulating a resonant unit (20, 30, 32) to perform mechanical oscillations, and cooling of the annular body (14) to a temperature below the glass transition temperature (T_{glass}) of its material follows, comprising the following method steps:
- axial and radial fixing of the annular body (14) in a bore of a holding device (10) before the local heating of the annular body (14),
- introducing a resonant unit (20, 30, 32) into the interior of the annular body (14) with axial forward movement,
- subsequent axial guiding of the resonant unit (20, 30, 32) as far as the immersion of a calibration section (24) of the resonant unit (20, 30, 32) into the annular body (14), softened or molten material of the annular body (14) being displaced by the penetrating resonant unit (20, 30, 32) laterally into regions of greater internal diameter of the annular body (14) or axially to the outside out of the annular body (14),
- if appropriate, removing the annular body (14) from the holding device (10) after the resonant unit (20, 30, 32) has been withdrawn and after cooling of the annular body (14) has taken place.

2. Method according to Claim 1, **characterized in that** the annular body (14) is forced axially against a shoulder (16) of the holding device (10) by a hold-down (18).

3. Body, in particular a sliding bush of a sliding bearing or guide ring for a piston of a piston pump of an electrohydraulically controllable vehicle braking system, the body consisting of plastic, **characterized in that** the body is formed annularly and **in that** the internal measurements of the annular body are calibrated in accordance with the method according to the features of Claims 1 or 2, in such a way that a surface in the area of the internal measurements of the body has a smooth portion without the occurrence of any material compaction and therefore of any reduction in the material elasticity.

## Revendications

1. Procédé de calibrage des dimensions internes d'un corps (14) en particulier annulaire en matière plastique thermoplastique ou partiellement cristalline, dans lequel un échauffement local du corps (14) annulaire s'effectue à au moins une température de transition vitreuse T(verre) de son matériau par transfert mécanique d'oscillations au corps (14) annulaire, au moyen d'une excitation d'une structure oscillante (20, 30, 32) pour produire des oscillations mécaniques, suivi d'un refroidissement du corps (14) annulaire à une température en dessous de la température de transition vitreuse T(verre) de son matériau, comprenant les étapes de procédé suivantes :
- fixation axiale et radiale du corps (14) annulaire dans un alésage d'un dispositif de réception (10) avant l'échauffement local du corps annulaire (14),
- introduction d'une structure oscillante (20, 30, 32) à l'intérieur du corps (14) annulaire avec avance axiale,
- guidage axial de la structure oscillante (20, 30, 32) jusqu'à l'enfoncement d'une portion de calibrage (24) de la structure oscillante (20, 30, 32) dans le corps (14) annulaire, un matériau ramolli ou fondu du corps (14) annulaire étant repoussé par la structure oscillante pénétrante (20, 30, 32) latéralement dans des régions de plus grand diamètre intérieur du corps (14) annulaire ou axialement vers l'extérieur hors du corps (14) annulaire,
- enlèvement éventuel du corps (14) annulaire hors du dispositif de réception (10) après retour en arrière de la structure oscillante (20, 30, 32) et après refroidissement réussi du corps (14) annulaire.

2. Procédé selon la revendication 1, **caractérisé en ce que** le corps (14) annulaire est pressé par un serre-flan (18) axialement contre un épaulement (16) du dispositif de réception (10).

3. Corps, en particulier manchon coulissant d'un palier lisse ou bague de guidage pour un piston d'une pompe de piston d'une installation de frein de véhicule réglable de manière électrohydraulique, le corps se composant de matière plastique, **caractérisé en ce que** le corps est réalisé sous forme annulaire et **en ce que** les dimensions internes du corps annulaire sont calibrées selon un procédé selon les caractéristiques de la revendication 1 ou 2, de telle sorte qu'une surface dans la plage des dimensions internes du corps présente un lissage sans qu'il ne se produise un épaississement de matériau et de ce fait une diminution de l'élasticité du matériau.
